# EUROPÄISCHE PATENTSCHRIFT

(11) **EP 1 068 096 B1**
(45) Veröffentlichungstag und Bekanntmachung des Hinweises auf die Patenterteilung: **06.08.2003**
(21) Anmeldenummer: 99914553.5
(22) Anmeldetag: 27.03.1999
(51) Int. Cl.: B60P 1/36

(54) **FAHRBARES FÖRDERGERÄT**
TRAVELLING CONVEYOR
CONVOYEUR MOBILE

(30) Priorität: 01.04.1998 DE 19814536
(43) Veröffentlichungstag der Anmeldung: 17.01.2001
(73) Patentinhaber: PUTZMEISTER Aktiengesellschaft, 72631 Aichtal (DE)
(72) Erfinder: SCHLECHT, Karl, D-70794 Filderstadt (DE)
(74) Vertreter: Wolf, Eckhard, Dr.-Ing.
(86) Internationale Anmeldenummer: EP9902118
(87) Internationale Veröffentlichungsnummer: WO99050091

(56) Entgegenhaltungen:
- BE-A- 572 355
- DE-U- 9 406 710
- GB-A- 2 154 968
- GB-A- 2 157 645
- GB-A- 2 246 997
- US-A- 4 813 526

## Beschreibung

Die Erfindung betrifft ein fahrbares Fördergerät für Schüttgut, Dickstoffe und dergleichen Fördergut, mit einem ein Fahrerhaus tragenden, mindestens eine Vorderachse und eine Hinterachse aufweisenden Fahrgestell, mit einem auf dem Fahrgestell im Bereich der Hinterachse angeordneten Drehwerk, mit einem mit seinem einen Ende am Drehwerk um eine vertikale Achse drehbaren und um eine horizontale Achse verschwenkbaren, einen Hauptbandförderer tragenden, vorzugsweise teleskopierbaren Ausleger, der in seinem Fahrzustand vom Drehwerk aus in Richtung Fahrerhaus weist und auf dem Fahrgestell oder auf dem Fahrerhaus abgestützt ist, und mit einer einen Zuführbandförderer aufweisenden Beschickungseinrichtung, die in ihrer Arbeitsposition mit ihrem aufgabeseitigen Ende auf den Boden absenkbar ist und mit ihrem abgabeseitigen Ende über das drehwerkseitige Ende des Hauptbandförderers hinweg reicht. Die Beschickungseinrichtung ist im Fahrzustand auf dem Fahrgestell transportierbar.

Bei bekannten fahrbaren Fördergeräten der genannten Art (GB-A-2 246 997) sind der Ausleger mit dem Hauptbandförderer am aufgabeseitigen Ende und die Beschickungseinrichtung mit dem Zuführförderer am abgabeseitigen Ende jeweils am Drehwerk gelagert, so dass in der Fahrstellung die Beschickungseinrichtung mit dem Zuführbandförderer auf der Oberseite des Auslegers aufliegt. Hierbei ergibt sich eine relativ große Gesamthöhe des Fahrzeugs mit entsprechend hoher Schwerpunktlage.

Ausgehend hiervon liegt der Erfindung die Aufgabe zugrunde, das bekannte fahrbare Fördergerät der eingangs angegebenen Art dahingehend zu verbessem, dass unter sonst gleichen Bedingungen die Bauhöhe im Fahrzustand reduziert und die Schwerpunktlage niedriger gelegt werden kann.

Zur Lösung dieser Aufgabe wird die im Kernzeichen von Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass im Fahrzustand des Auslegers im Bereich zwischen dem Ausleger und dem Fahrgestell ein Freiraum vorhanden ist, der zur Aufnahme der Beschickungseinrichtung im Fahrzustand geeignet ist. Die Beschickungseinrichtung kann dabei an einer fahrgestellfesten Lagerstelle im Abstand vom Drehwerk schwenkbar und/oder verschiebbar gelagert werden. Gemäß einer vorteilhaften Ausgestaltung der Erfindung befindet sich die Lagerstelle neben dem Fahrerhaus auf dem Fahrgestell, wobei das Fahrerhaus in diesem Falle schmaler als das Fahrgestell ist und einseitig auf diesem angeordnet werden kann. Um die Beschickungseinrichtung von ihrem Fahrzustand aus in die Arbeitsposition bringen zu können, ist es von Vorteil, wenn sie um eine horizontale Achse und gegebenenfalls um eine vertikale Achse gegenüber der fahrgestellfesten Lagerstelle verschwenkbar ist.

Eine optimale Ausnutzung des unterhalb des Auslegers befindlichen Freiraums kann dadurch erzielt werden, dass der Zuführbandförderer mindestens zwei, vorzugsweise drei um eine horizontale Achse gegeneinander verschwenkbare Bandsegmente aufweist. Um ein vollständiges Zusammenklappen und Auseinanderklappen der Bandsegmente zu ermöglichen, sind die Bandsegmente zweckmäßig um einen Winkel von 160° bis 230° gegeneinander verschwenkbar. In der Arbeitsposition ist der Zuführbandförderer zweckmäßig etwa parallel zur Längsachse des Fahrgestells ausgerichtet, wobei die Beschickungsseite sich in der Nähe des Fahrerhauses befindet. Die Beschickung kann dabei über einen zum aufgabeseitigen Ende des Zuführbandförderers weisenden Materialaufgabebehälter erfolgen. Wenn der Zuführbandförderer mindestens zwei um eine zur Bandebene vertikale Achse gegeneinander verschwenkbare Bandsegmente ausweist, kann die Beschickungsstelle auch aus der Längsachse des Fahrgestells herausgeschwenkt werden. Eine weitere Verbesserung in dieser Hinsicht kann dadurch erzielt werden, dass die Beschickungseinrichtung von der Lagerstelle lösbar und gegebenenfalls mit dem Ausleger kuppelbar und zusammen mit diesem relativ zum Fahrgestell um die Achse des Drehwerks verschwenkbar ist. Um die Reichweite des Zuführbandförderers zu verändern, ist es von Vorteil, wenn der Zuführbandförderer oder mindestens eines seiner Bandsegmente teleskopierbar ist.

Im Folgenden wird die Erfindung anhand der in der Zeichnung in schematischer Weise dargestellten Ausführungsbeispiele näher erläutert. Es zeigen
- Fig. 1: eine Seitenansicht eines fahrbaren Fördergeräts mit einer ersten Ausführungsvariante eines Zuführbandförderers im Fahrzustand;
- Fig. 2: eine Seitenansicht entsprechend Fig. 1 mit einer zweiten Ausführungsvariante des Zuführbandförderers im Fahrzustand;
- Fig. 3: eine Seitenansicht des fahrbaren Fördergeräts in Arbeitsposition;
- Fig. 4a: eine Draufsicht auf das fahrbare Fördergerät mit ausgeschwenktem Ausleger und mit dem Ausleger kuppelbarem Zuführbandförderer;
- Fig. 4b: eine Frontansicht des Fördergeräts nach Fig. 4a ohne Fahrgestell.

Die in der Zeichnung dargestellten fahrbaren Fördergeräte sind für Schüttgüter, Dickstoffe und dergleichen Fördergut bestimmt. Als Fördergut kommen vor allem körnige Schüttgüter wie Kies, Sand, Erde, Mager- und Stampfbeton in Betracht.

Das Fördergerät befindet sich auf einem ein Fahrerhaus 10 tragenden, bei dem gezeigten Ausführungsbeispiel zwei Vorderachsen 12 und zwei Hinterachsen 14 aufweisenden Fahrgestell 16, das in der Arbeitsstellung über mehrere ausklappbare oder teleskopierbare Stützbeine 18 auf dem Boden 20 abstützbar ist. Im Bereich der Hinterachsen 14 befindet sich auf dem Fahrgestell 16 ein Drehwerk 22, auf welchem ein Ausleger 24 um eine vertikale Achse 26 drehbar und um eine horizontale Achse 28 mit Hilfe eines Hydrozylinders 30 verschwenkbar angeordnet ist. Der Ausleger 24 ist in seiner Länge mit Hilfe mehrerer Teleskopteile 24', 24", 24"' veränderbar und trägt einen Hauptbandförderer, der sich vom Drehwerk 22 aus bis zur Spitze des Auslegers 24"' erstreckt. Der Ausleger 24 mit den eingefahrenen Teleskopelementen 24', 24", 24"' weist im Fahrzustand vom Drehwerk 22 aus in Richtung Fahrerhaus 10 und ist in seinem vorderen Bereich auf dem Fahrgestell 16 oder auf dem Fahrerhaus 10 abgestützt.

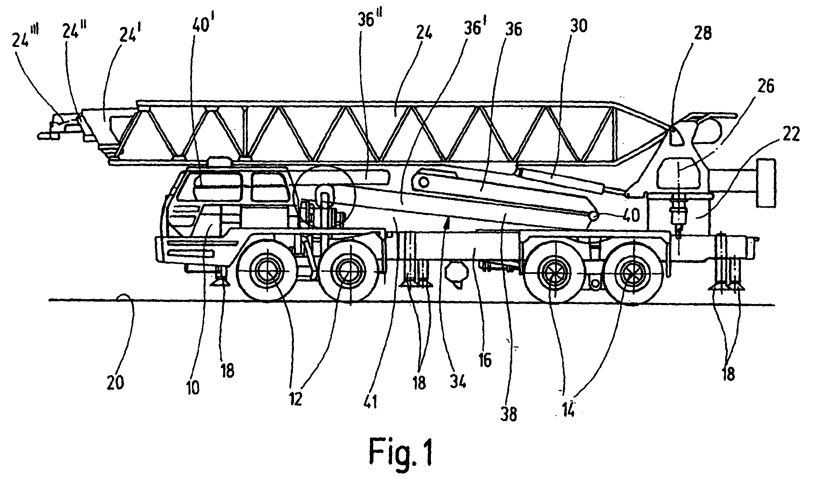

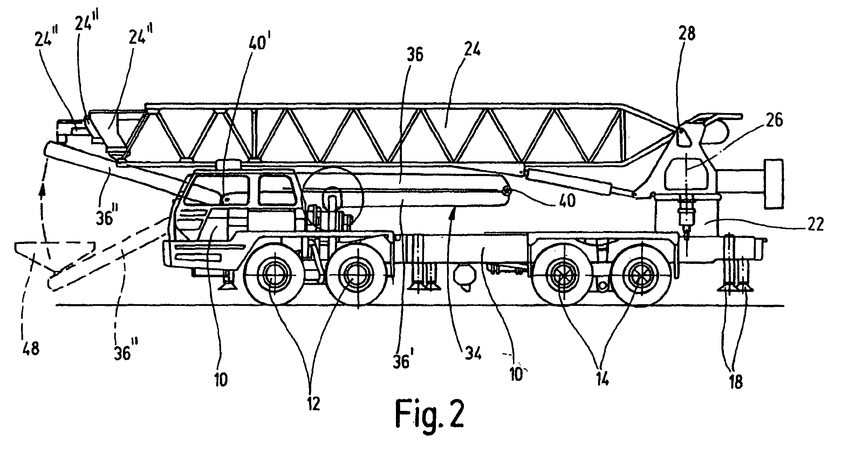

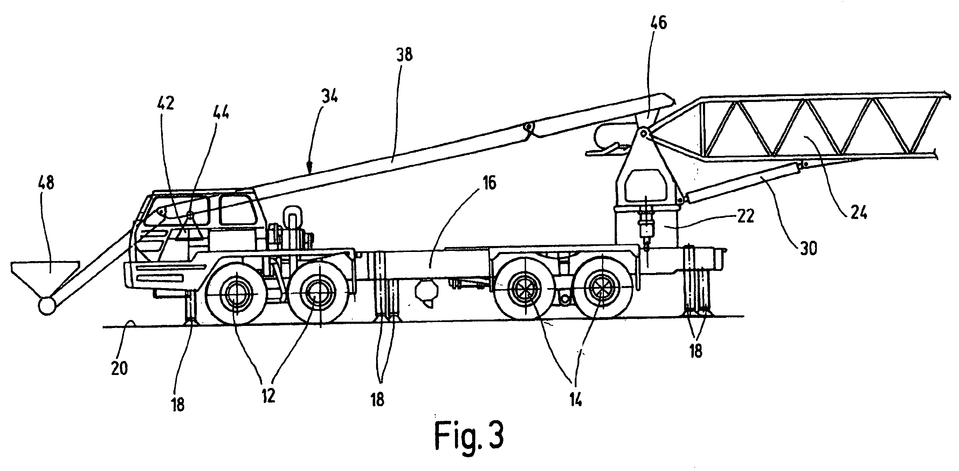

Die Beschickung des Hauptförderbandes 32 erfolgt über eine Beschickungseinrichtung 34, die bei den gezeigten Ausführungsbeispielen einen aus drei Segmenten 36, 36', 36" bestehenden Zuführbandförderer 38 aufweist. Der Zuführbandförderer 38 ist an einer neben dem Fahrerhaus 10 auf dem Fahrgestell 16 angeordneten Lagerstelle 42 um eine horizontale Achse 44 gegenüber dem Fahrgestell 16 verschwenkbar angeordnet. In der Fahrstellung werden die Bandsegmente 36, 36', 36" des Zuführbandförderers 38 um ihre Achsen 40, 40' so gegeneinander geklappt, dass sie in dem Freiraum 41 zwischen dem Ausleger 24 und dem Fahrgestell 16 Platz finden. Bei dem in Fig. 1 gezeigten Ausführungsbeispiel weist das Bandsegment 36" im Fahrzustand des Zuführbandförderers nach hinten, während es bei dem in Fig. 2 gezeigten Ausführungsbeispiel nach vome weist und im vorderen Bereich des Auslegers 24 aufgehängt ist. Um den Zuführbandförderer 38 in Arbeitsposition zu bringen, muss zunächst der Ausleger 24 um die Vertikalachse 26 des Drehwerks 22 zur Seite geschwenkt werden, damit der Schwenkweg der Bandsegmente 36 und 36" (Fig. 1) bzw. 36 (Fig. 2) frei wird. In dieser Stellung wird das Bandsegment 36" am Fahrgestell 16 nach unten in Richtung Boden 20 geschwenkt, während das Bandsegment 36 in Strecklage zum Bandsegment 36' gebracht wird, bis es unter leichtem Kippen des Bandsegments 36' um die Achse 44 der Lagerstelle 42 zur Übergabestelle 46 am Bandanfang des Hauptbandförderers 32 oberhalb des Drehwerks 22 gelangt (Fig. 3). Das aufgabeseitige Ende des Zuführbandförderers 38 wird dann noch mit einem Materialaufgabebehälter 48 bestückt, über den das zu transportierende Schüttgut eingebracht wird.

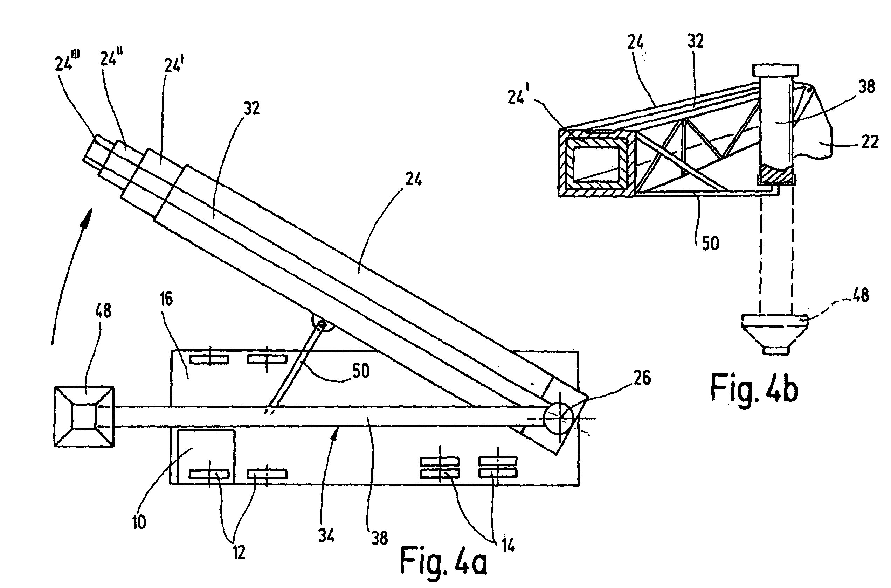

Bei dem in Fig. 4a und b gezeigten Ausführungsbeispiel ist am Ausleger 24 ein Hebel 50 angelenkt, über den die Beschickungseinrichtung 34 mit dem Ausleger 24 gekuppelt und nach Trennen von der Lagerstelle 42 zusammen mit diesem um die vertikale Achse 26 des Drehwerks 22 gegenüber dem Fahrgestell 16 verschwenkt werden kann. Auf diese Weise ist es möglich, den Zuführbandförderer 38 aus der Längsachse des Fahrgestells 16 herauszudrehen und in eine für die Materialaufgabe günstigere Position zu bringen.

## Patentansprüche

1. Fahrbares Fördergerät für Schüttgut mit einem ein Fahrerhaus (10) tragenden, mindestens eine Vorderachse (12) und eine Hinterachse (14) aufweisenden Fahrgestell (16), mit einem auf dem Fahrgestell (16) im Bereich der Hinterachse (14) angeordneten Drehwerk (22), mit einem mit seinem einen Ende am Drehwerk (22) um eine vertikale Achse (26) drehbaren und um eine horizontale Achse (28) verschwenkbaren, einen Hauptbandförderer (32) tragenden, teleskopierbaren Ausleger (24), der im Fahrzustand vom Drehwerk (22) aus in Richtung Fahrerhaus (10) weist und auf dem Fahrgestell abgestützt ist, und mit einer einen Zuführbandförderer (38) aufweisenden Beschickungseinrichtung (34), die in ihrer Arbeitsposition mit ihrem aufgabeseitigen Ende in Richtung Boden (20) absenkbar ist und mit ihrem abgabeseitigen Ende über das drehwerkseitige Ende des Hauptbandfonierers (32) hinweg reicht, **dadurch gekennzeichnet, dass** die Beschickungseinrichtung im Fahrzustand in einem zwischen Ausleger (24) und Fahrgestell (16) gebildeten Freiraum (41) unterhalb des Auslegers (24) angeordnet ist.

2. Fahrbares Fördergerät nach Anspruch 1, **dadurch gekennzeichnet, dass** die Beschickungseinrichtung (34) an einer fahrgestellfesten Lagerstelle (42) im Abstand vom Drehwerk (22) schwenk- und/oder verschiebbar gelagert ist.

3. Fahrbares Fördergerät nach Anspruch 1 oder 2, **dadurch gekennzeichnet, dass** die Lagerstelle (42) neben dem Fahrerhaus (10) auf dem Fahrgestell (16) angeordnet ist.

4. Fahrbares Fördergerät nach einem der Ansprüche 1 bis 3, **dadurch gekennzeichnet, dass** das Fahrerhaus (10) schmaler als das Fahrgestell (16) und einseitig auf diesem angeordnet ist.

5. Fahrbares Fördergerät nach einem der Ansprüche 1 bis 4, **dadurch gekennzeichnet, dass** die Beschickungseinrichtung (34) um eine horizontale Achse (44) gegenüber der fahrgestellfesten Lagerstelle (42) verschwenkbar ist.

6. Fahrbares Fördergerät nach einem der Ansprüche 1 bis 5, **dadurch gekennzeichnet, dass** die Beschickungseinrichtung (34) um eine vertikale Achse gegenüber der fahrgestellfesten Lagerstelle (42) verschwenkbar ist.

7. Fahrbares Fördergerät nach einem der Ansprüche 1 bis 6, **dadurch gekennzeichnet, dass** der Zuführbandförderer (38) mindestens zwei, vorzugsweise drei um eine horizontale Achse (40, 40') gegeneinander verschwenkbare Bandsegmente (36, 36', 36") aufweist.

8. Fahrbares Fördergerät nach einem der Ansprüche 1 bis 7, **dadurch gekennzeichnet, dass** die Beschickungseinrichtung (34) mit der Lagerstelle (42) lösbar verbunden ist.

9. Fahrbares Fördergerät nach einem der Ansprüche 1 bis 8, **dadurch gekennzeichnet, dass** die Beschickungseinrichtung (34) mit dem Ausleger (24) kuppelbar und zusammen mit diesem relativ zum Fahrgestell (16) bewegbar ist.

10. Fahrbares Fördergerät nach Anspruch 9, **dadurch gekennzeichnet, dass** die Beschickungseinrichtung (34) zusammen mit dem Ausleger (24) um die vertikale Achse (26) des Drehwerks (22) verschwenkbar ist.

11. Fahrbares Fördergerät nach einem der Ansprüche 1 bis 10, **dadurch gekennzeichnet, dass** der Zuführbandförderer (38) teleskopierbar ist.

12. Fahrbares Fördergerät nach einem der Ansprüche 1 bis 11, **dadurch gekennzeichnet, dass** die Beschickungseinrichtung (34) einen zum aufgabeseitigen Ende des Zuführbandförderers (38) weisenden Materialaufgabebehälter (48) aufweist.

## Claims

1. Travelling conveyor for bulk material, comprising a chassis (16) which carries a driver's cab (10) and has at least one front axle (12) and one rear axle (14), comprising a slewing gear (22) disposed on the chassis (16) in the region of the rear axle (14), comprising a telescoping boom (24) which carries a main belt conveyor (32) and which is adapted to rotate at the slewing gear (22) about a vertical axis (26) with its one end and which is adapted to pivot about a horizontal axis (28), which boom is aligned in the travelling state from the slewing gear (22) to the driver's cab (10) and supported on the chassis, and comprising a charging device (34) having a delivery belt conveyor (38), which charging device is adapted to be lowered to the ground (20) with its feeding end in its working position and which extends over the slewing gear end of the main belt conveyor (32) with its discharge end, **characterized in that** in the travelling state the charging device is disposed in a free space (41) below the boom (24), which space is formed between the boom (24) and the chassis (16).

2. Travelling conveyor according to claim 1, **characterized in that** the charging device (34) is borne pivotally and/or slideably with respect to a chassis-fixed bearing point (42) located at a distance from the slewing gear (22).

3. Travelling conveyor according to claim 1 or 2, **characterized in that** the bearing point (42) is disposed on the chassis (16) adjacent to the driver's cab (10).

4. Travelling conveyor according to one of claims 1 to 3, **characterized in that** the driver's cab (10) is narrower than the chassis (16) and disposed offset to one side of the chassis.

5. Travelling conveyor according to one of claims 1 to 4, **characterized in that** the charging device (34) is adapted to pivot with respect to the chassis-fixed bearing point (42) about a horizontal axis (44).

6. Travelling conveyor according to one of claims 1 to 5, **characterized in that** the charging device (34) is adapted to pivot with respect to the chassis-fixed bearing point (42) about a vertical axis.

7. Travelling conveyor according to one of claims 1 to 6, **characterized in that** the delivery belt conveyor (38) comprises at least two, preferably three belt segments (36, 36', 36") which are adapted to pivot with respect to each other about a horizontal axis (40, 40').

8. Travelling conveyor according to one of claims 1 to 7, **characterized in that** the charging device (34) is removably connected to the bearing point (42).

9. Travelling conveyor according to one of claims 1 to 8, **characterized in that** the charging device (34) is adapted to be coupled to the boom (24) and moveable together with the boom relative to the chassis (16).

10. Travelling conveyor according to claim 9, **characterized in that** the charging device (34) is adapted to pivot together with the boom (24) about the vertical axis (26) of the slewing gear (22).

11. Travelling conveyor according to one of claims 1 to 10, **characterized in that** the delivery belt conveyor is adapted to telescope.

12. Travelling conveyor according to one of claims 1 to 11, **characterized in that** the charging device (34) comprises a material feed container (48) which is oriented toward the feeding end of the delivery belt conveyor.

## Revendications

1. Engin de convoyage roulant pour des produits en vrac, avec un châssis (16) portant une cabine de conduite (10) et comprenant au moins un essieu avant (12) et un essieu arrière (14), avec un dispositif de rotation (22) disposé sur le châssis (16) dans la zone de l'essieu arrière (14), avec une flèche télescopique (24) portant un convoyeur à bande principal (32), pouvant tourner à une de ses extrémités sur le dispositif de rotation (22) autour d'un axe vertical (26) et pouvant pivoter autour d'un axe horizontal (28) et qui, dans la configuration de circulation, est alignée depuis le dispositif de rotation (22) en direction de la cabine de conduite (10) et s'appuie sur le châssis, et avec un dispositif d'alimentation (34) comprenant un convoyeur à bande d'amenée (38) et qui, dans sa position de travail, peut être abaissé avec son extrémité de chargement en direction du sol (20) et dont l'extrémité de déversement s'étend au-delà de l'extrémité située du côté du dispositif de rotation du convoyeur à bande principal (32), **caractérisé en ce que**, dans la configuration de circulation, le dispositif d'alimentation est disposé en dessous de la flèche (24) dans un espace libre (41) formé entre la flèche (24) et le châssis (16).

2. Engin de convoyage roulant selon la revendication 1, **caractérisé en ce que** le dispositif d'alimentation (34) est logé de manière pivotante et/ou coulissante à un point d'appui (42) solidaire du châssis avec un espacement par rapport au dispositif de rotation (22).

3. Engin de convoyage roulant selon la revendication 1 ou 2, **caractérisé en ce que** le point d'appui (42) est disposé sur le châssis (16) à côté de la cabine de conduite (10).

4. Engin de convoyage roulant selon l'une quelconque des revendications 1 à 3, **caractérisé en ce que** la cabine de conduite (10) est plus étroite que le châssis (16) et est disposée d'un côté sur celui-ci.

5. Engin de convoyage roulant selon l'une quelconque des revendications 1 à 4, **caractérisé en ce que** le dispositif d'alimentation (34) peut être pivoté par rapport au point d'appui solidaire du châssis (42) autour d'un axe horizontal (44).

6. Engin de convoyage roulant selon l'une quelconque des revendications 1 à 5, **caractérisé en ce que** le dispositif d'alimentation (34) peut être pivoté par rapport au point d'appui solidaire du châssis (42) autour d'un axe vertical.

7. Engin de convoyage roulant selon l'une quelconque des revendications 1 à 6, **caractérisé en ce que** le convoyeur à bande d'amenée (38) comprend au moins deux, de préférence trois, segments de bandes (36, 36', 36") pouvant être pivotés entre eux autour d'un axe horizontal (40, 40').

8. Engin de convoyage roulant selon l'une quelconque des revendications 1 à 7, **caractérisé en ce que** dispositif d'alimentation (34) est relié de manière amovible avec le point d'appui (42).

9. Engin de convoyage roulant selon l'une quelconque des revendications 1 à 8, **caractérisé en ce que** le dispositif d'alimentation (34) peut être accouplé avec la flèche (24) et peut être déplacé en même temps que celle-ci par rapport au châssis (16).

10. Engin de convoyage roulant selon la revendication 9, **caractérisé en ce que** le dispositif d'alimentation (34) peut être pivoté en même temps que la flèche (24) autour de l'axe vertical (26) du dispositif de rotation (22).

11. Engin de convoyage roulant selon l'une quelconque des revendications 1 à 10, **caractérisé en ce que** le convoyeur à bande d'amenée (38) est télescopique.

12. Engin de convoyage roulant selon l'une quelconque des revendications 1 à 11, **caractérisé en ce que** le dispositif d'alimentation (34) comprend un conteneur de chargement de matériaux (48) orienté vers l'extrémité située du côté du chargement du convoyeur à bande d'amenée (38).
